# EUROPEAN PATENT APPLICATION

(11) **EP 4 447 571 A1**
(43) Date of publication of application: **16.10.2024**
(21) Application number: 23167375.7
(22) Date of filing: 11.04.2023
(51) Int. Cl.: H04W 60/04, H04W 48/18

(54) **METHOD FOR TRIGGERING USER EQUIPMENT, UE, TO SWITCH CONNECTION FROM A PREFERRED PUBLIC LAND MOBILE NETWORK, PLMN, TO A NON-PUBLIC NETWORK, NPN, IN A WIRELESS COMMUNICATION SYSTEM**

(71) Applicant: Ivent Mobile B.V., 1251 MA Laren (NL)
(72) Inventor: Begeer, Carel Rutger Bastiaan, 1251 MA LAREN (NL)
(74) Representative: Patent Business B.V.

(57) **Abstract**

The invention provides a method for triggering a user equipment (UE) comprising a data memory storing an embedded identity document (EID) and storing a profile, which user equipment (UE) is connected to a public land mobile network (PLMN), to switch connection to a non-public network (NPN) in a wireless communication system, the method comprising:
the non-public network (NPN) detecting a user equipment (UE) comprising a first profile in a transmission range of the non-public network (NPN);
the non-public network (NPN) verifying in a database coupled to said non-public network (NPN) if the user equipment (UE) is allowed access to the non-public network (NPN);
if the user equipment (EU) is allowed access to the non-public network (NPN), the non-public network (NPN) sends via a subscription manager a second profile adapted for accessing the non-public network (NPN) to the user equipment (UE), and
upon receiving the second profile at the user equipment (UE), the user equipment (UE) replaces the first profile with the second profile which causes the UE to switch to the NPN.

## Description

### Field of the invention

The invention relates to a method for triggering user equipment to switch connection.

### Background of the invention

A private 5G network is a local area network (LAN) that will use 5G technologies to create a dedicated network with unified connectivity, optimised services and a secure means of communication within a specific area. It is known as a local or non-public 5G network, It will deliver the speed, latency and other benefits promised by 5G to support next-generation applications.

US2022/0053313 in its abstract reads: "Apparatuses, systems, and methods for SoR list management and PLMN selection based on an SoR list. A UE may receive an SoR container which may include a list of OPLMNs. The UE may store a prior list of OPLMNs stored on a USIM of the UE on a memory of the UE. The UE replace the prior list of OPLMNs stored on the USIM with the list of OPLMNs included in the SoR container. The UE may consider the prior list of OPLMNs as a lower priority list as compared to the list of OPLMNs stored on the USIM. Additionally, in response to determining to move from a current PLMN, the UE may scan for a new PLMN based on the list of OPLMNs stored on the USIM."

### Summary of the invention

A disadvantage of prior art is that when connected to public land mobile network (PLMN), it is often problematic to switch to a non-public network (NPN).

Hence, it is an aspect of the invention to provide a method to force a user equipment (UE) to connect from a PLMN to a NPN without any user interference.

There is provide a method for triggering a user equipment (UE) comprising a data memory storing an embedded identity document (EID) and storing a profile, which user equipment (UE) is connected to a public land mobile network (PLMN), to switch connection to a non-public network (NPN) in a wireless communication system, the method comprising:
- the non-public network (NPN) detecting a user equipment (UE) comprising a first profile in a transmission range of the non-public network (NPN);
- the non-public network (NPN) verifying in a database coupled to said non-public network (NPN) if the user equipment (UE) is allowed access to the non-public network (NPN);
- if the user equipment (EU) is allowed access to the non-public network (NPN), the non-public network (NPN) sends via a subscription manager a second profile adapted for accessing the non-public network (NPN) to the user equipment (UE), and
upon receiving the second profile at the user equipment (UE), the user equipment (UE) replaces the first profile with the second profile which causes the UE to switch to the NPN.

The proposed method has the advantage that switching to a mobile communication or data network that is controlled by a private entity such as companies, public bodies, governmental institutions, and the like, without user interference and swift. By controlling the network access, the private entity can control the quality of service, security, protection while using the network hardware selected by the entity, more than what is supported by the PLMN. The NPN controls data communication while a user can keep using its selected UE.

There is furthermore provided wireless communication system comprising:
a user equipment (EU) comprising a wireless transmitter, a data memory and a data processor,
a public mobile land network (PMLN) coupled to a data memory and
a non-public network (NPN) coupled to a data memory,
wherein said user equipment running a computer program on said date processor and which:
   transmits via a wireless transmitter to the non-public network (NPN) allowing detecting said user equipment (UE) comprising a first profile in a transmission range of the non-public network (NPN);
   receives from said non-public network (NPN) a second profile adapted for accessing the non-public network (NPN), and
   upon receiving the second profile at the user equipment (UE), replacing the first profile with the second profile which causes the user equipment UE to switch to the non-public network (NPN).

There is furthermore provided a wireless communication system comprising a user equipment (EU) comprising a data memory and a data processor, a public mobile land network (PMLN) and a non-public network (NPN) coupling to a data memory, wherein said non-public network (NPN) comprises a computer system running a non-public network computer program which:
allows detection of the non-public network (NPN) of said user equipment (UE) comprising a first profile in a transmission range of the non-public network (NPN);
verifying in a database in said non-public network data memory if the user equipment (UE) is allowed access to the non-public network (NPN); if the user equipment (EU) is allowed access to the non-public network (NPN), sends a second profile adapted for accessing the non-public network (NPN) to the user equipment (UE), causing upon receiving the second profile at the user equipment (UE), the user equipment (UE) to replace the first profile with the second profile allowing the user equipment (UE) to switch to the non-public network (NPN).

There is further provided user equipment computer program which, when running on a data processor of said user equipment (EU) comprising a wireless transmitter and data memory, causes said user equipment to:
transmit via a wireless transmitter to the non-public network (NPN) allowing detecting said user equipment (UE) comprising a first profile in a transmission range of the non-public network (NPN);
receive from said non-public network (NPN) a second profile adapted for accessing the non-public network (NPN), and
upon receiving the second profile at the user equipment (UE), replace the first profile with the second profile which causes the user equipment UE to switch to the non-public network (NPN).

There is furthermore provided a non-public network (NPN) computer program which, when running on a data processor of said non-public network (NPN) comprising a series of wireless transmitters and data memory comprising a database, causes said non-public network (NPN) to:
allow detection of the non-public network (NPN) of said user equipment (UE) comprising a first profile in a transmission range of the non-public network (NPN);
verifying in a database in said non-public network data memory if the user equipment (UE) is allowed access to the non-public network (NPN);
if the user equipment (EU) is allowed access to the non-public network (NPN), sends a second profile adapted for accessing the non-public network (NPN) to the user equipment (UE), causing upon receiving the second profile at the user equipment (UE), the user equipment (UE) to replace the first profile with the second profile allowing the user equipment (UE) to switch to the non-public network (NPN).

Non-public networks for example can be installed at an embassy, enterprises or companies, ngo's, universities, Governmental institutions, military, police and the like

In an embodiment, the user equipment comprises a universal subscriber identity module (USIM) and the embedded identity document (EID) is stored on the universal subscriber identity module (USIM).

In an embodiment, the user equipment comprises a universal subscriber identity module (USIM) and the profile is stored on the universal subscriber identity module (USIM).

In an embodiment the profile includes an international mobile subscriber identity (IMSI) and a list of operator preferred public land mobile networks (OPLMNs).

In an embodiment, the user equipment (UE) is connected to a preferred public land mobile network (PLMN).

In an embodiment, the method further comprises authorizing the user equipment (UE) access to the non-public network (NPN), and
send a steering of roaming (SoR) container to the user equipment (UE), the SoR includes at least the NPN identifier,
wherein upon receiving the SoR container, the PLMN identifier stored a universal subscriber identity module (USIM) on the memory of the user equipment (UE), is replaced by the non-public network (NPN) identifier.

In an embodiment, after replacing the first profile on the universal subscriber identity module (USIM) with the second profile, a user input is requested for an explicit restart subscriber identity module (SIM) command.

In an embodiment the preferred public land mobile network (PLMN) is associated with a public land mobile network (PLMN) identifier, and the non-public network (NPN) is associated with a non-public network (NPN) identifier.

The terms "upstream" and "downstream" relate to an arrangement of items or features relative to the propagation of the light from a light generating means (here the especially the first light source), wherein relative to a first position within a beam of light from the light generating means, a second position in the beam of light closer to the light generating means is "upstream", and a third position within the beam of light further away from the light generating means is "downstream".

The term "substantially" herein, such as in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of'.

The term "functionally" will be understood by, and be clear to, a person skilled in the art. The term "substantially" as well as "functionally" may also include embodiments with "entirely", "completely", "all", etc. Hence, in embodiments the adjective functionally may also be removed. When used, for instance in "functionally parallel", a skilled person will understand that the adjective "functionally" includes the term substantially as explained above. Functionally in particular is to be understood to include a configuration of features that allows these features to function as if the adjective "functionally" was not present. The term "functionally" is intended to cover variations in the feature to which it refers, and which variations are such that in the functional use of the feature, possibly in combination with other features it relates to in the invention, that combination of features is able to operate or function. For instance, if an antenna is functionally coupled or functionally connected to a communication device, received electromagnetic signals that are receives by the antenna can be used by the communication device. The word "functionally" as for instance used in "functionally parallel" is used to cover exactly parallel, but also the embodiments that are covered by the word "substantially" explained above. For instance, "functionally parallel" relates to embodiments that in operation function as if the parts are for instance parallel. This covers embodiments for which it is clear to a skilled person that it operates within its intended field of use as if it were parallel.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices or apparatus herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device or apparatus claims enumerating several means, several of these means may be embodied by one and the same item of hardware. The mere fact that certain measures are recited in mutually different dependent claims does not indicate that a combination of these measures cannot be used to advantage.

The invention further applies to an apparatus or device comprising one or more of the characterising features described in the description and/or shown in the attached drawings. The invention further pertains to a method or process comprising one or more of the characterising features described in the description and/or shown in the attached drawings.

The various aspects discussed in this patent can be combined in order to provide additional advantages. Furthermore, some of the features can form the basis for one or more divisional applications.

### Brief description of the drawings

Embodiments of the invention will now be described, by way of example only, with reference to the accompanying schematic drawings in which corresponding reference symbols indicate corresponding parts, and in which:
Figure 1 schematically depicts an embodiment of the current method, and
Figure 2 Schematically a user equipment.

The drawings are not necessarily on scale

### Description of preferred embodiments

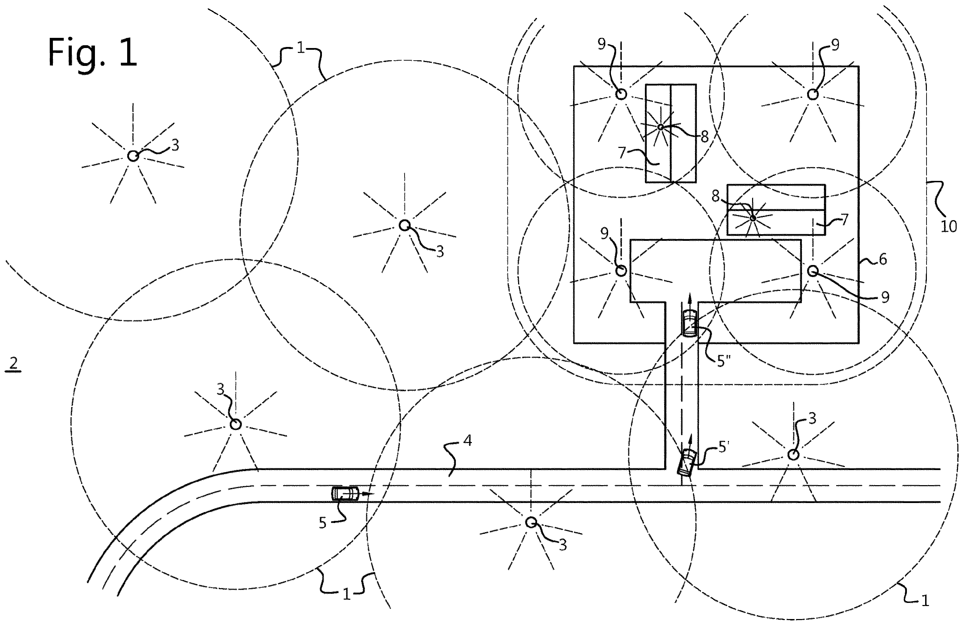

Figure 1 schematically depicts an area 2 on which antennas 3 are distributed. Each antenna has a transmission range 1. Thus, most of the area is covered. Together the antennas 3 build a cellular network. Such a cellular network allows cellular devices, like for instance cell phones or other devices, to communicate with one another. Historically, communication protocols were used such as GSM, 4G, and currently 5G.

In order to connect to the cellular network, the cellular device is provided with a subscriber identity module (USIM).

The area 2 is in this embodiment further provided with a road 4 over which user equipment like for instance a cell phone travels. In the drawing, the user 5 has subsequent positions indicated with 5' and 5". In this embodiment, at position 5 and 5' the user travels towards a company or institute compound 6. At position 5" the user entered the company or institute compound 6.

The user 5 when travelling to position 5' switches between antennas 3 and thus keeps an (almost continuous) wireless connection. The user equipment is thus connected to a public land mobile network.

On the company or institute compound 6 is a wireless private network in operation. Several antennas provide a full coverage of the company or institute compound, which is indicated with reference number 10. To that end, there are several outdoors antennas 9 on the company or institute compound 6. In the buildings 7, there are various antennas 8 installed for providing wireless coverage.

A company or institute can for instance also be a floral auction terrain, production location, university campus, and the like.

The user equipment can for instance be integrated in a lorry or truck, or be a device carried by the driver. In such a setting, a truck with for instance supplies or material enters the compound and automatically switches from the public network to the secure company network.

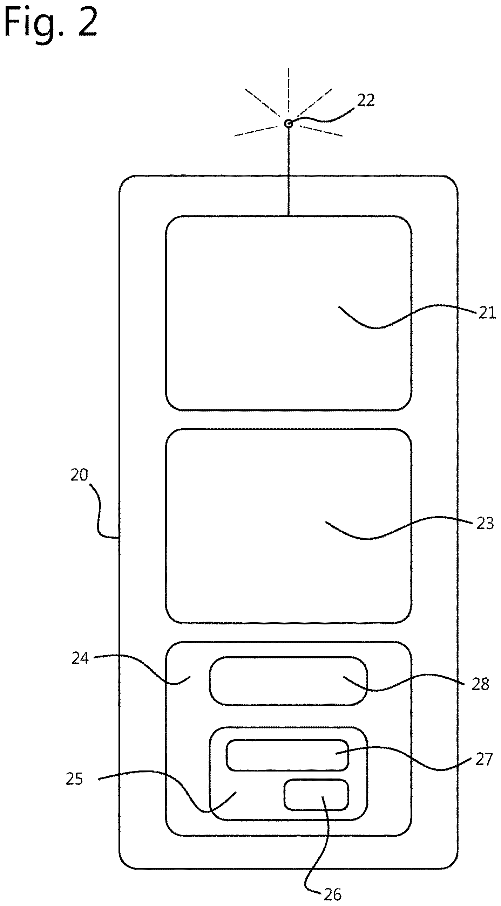

In figure 2, an example of a user equipment 20 is schematically illustrated. Only the elements that are essential in the current context are discussed and illustrated. The user equipment comprises a wireless transmitter 21 with an antenna 22.

The user equipment 20 furthermore comprises a data processer 23 and a data memory 24. In the current embodiment, the memory 24 comprises a universal subscriber identity module or USIM 25. The USIM 25 comprises an embedded identity document (EID) 26 and a profile 27 both stored on a universal subscriber identity module (USIM) which profile 27 includes an international mobile subscriber identity (IMSI) and a list of operator preferred public land mobile networks (OPLMNs). The user equipment further comprises computer software 28.

Some definitions that explain some embodiments:
embedded UICC: A UICC which is not easily accessible or replaceable, is not intended to be removed or replaced in the terminal, and enables the secure changing of Subscriptions.

The context for which a specific PIN can be used.

PIN Context Policy Rules: Defines the atomic action of a Policy and the conditions under which it is executed.

Profile Combination of a file structure: data and applications on an eUICC.

Profile Creator: External entity in charge of creating the Profile Package based on MNO requirements, protecting the Profile Package from modification and/or content access.

Profile Element: A Profile Element is a part of the Profile Package representing one or several features of the Profile encoded using TLV structures based on ASN.1 description.

Profile: A Personalised Profile using an interoperable description format transmitted to an eUICC in order to load and install a Profile.

Package Provisioning: The downloading and installation of a Profile into an eUICC.

Remote Provisioning: Provisioning done by the subscription manager on an eUICC outside of his premises, using a secure data link.

It will also be clear that the above description and drawings are included to illustrate some embodiments of the invention, and not to limit the scope of protection. Starting from this disclosure, many more embodiments will be evident to a skilled person. These embodiments are within the scope of protection and the essence of this invention and are obvious combinations of prior art techniques and the disclosure of this patent.

### Reference numbers

- 1: sending range of a transmission antenna
- 2: surrounding
- 3: Transmission antenna
- 4: road
- 5, 5', 5": traveling user equipment
- 6: fence of company terrain
- 7: building
- 8: wireless transmission antenna
- 9: company transmission
- 10: sending range of company
- 20: user equipment
- 21: wireless transmitter
- 22: antenna
- 23: data processor
- 24: memory
- 25: USIM
- 26: embedded identity document (EID)
- 27: profile
- 28: software

## Claims

1. A method for triggering a user equipment (UE) comprising a data memory storing an embedded identity document (EID) and storing a profile, which user equipment (UE) is connected to a public land mobile network (PLMN), to switch connection to a non-public network (NPN) in a wireless communication system, the method comprising:
- the non-public network (NPN) detecting a user equipment (UE) comprising a first profile in a transmission range of the non-public network (NPN);
- the non-public network (NPN) verifying in a database coupled to said non-public network (NPN) if the user equipment (UE) is allowed access to the non-public network (NPN);
- if the user equipment (EU) is allowed access to the non-public network (NPN), the non-public network (NPN) sends via a subscription manager a second profile adapted for accessing the non-public network (NPN) to the user equipment (UE), and
upon receiving the second profile at the user equipment (UE), the user equipment (UE) replaces the first profile with the second profile which causes the UE to switch to the NPN.

2. The method of claim 1, wherein the user equipment comprises a universal subscriber identity module (USIM) and the embedded identity document (EID) is stored on the universal subscriber identity module (USIM).

3. The method of claim 1 or 2, wherein the user equipment comprises a universal subscriber identity module (USIM) and the profile is stored on the universal subscriber identity module (USIM).

4. The method of any one of the preceding claims, wherein said profile includes an international mobile subscriber identity (IMSI) and a list of operator preferred public land mobile networks (OPLMNs).

5. The method of any one of the preceding claims, wherein said user equipment (UE) is connected to a preferred public land mobile network (PLMN).

6. A method for triggering a user equipment (UE) having an embedded identity document (EID) and a profile both stored on a universal subscriber identity module (USIM) which profile includes an international mobile subscriber identity (IMSI) and a list of operator preferred public land mobile networks (OPLMNs), which user equipment (UE) is connected to a preferred public land mobile network (PLMN), to switch connection to a non-public network (NPN) in a wireless communication system, the method comprising:
- detect a user equipment (UE) comprising a first profile in the non-public network (NPN);
- verify in a database if the user equipment (UE) is allowed access to the non-public network (NPN);
- if the user equipment (UE) is allowed access to the non-public network (NPN), the non-public network (NPN) sending via a subscription manager a second profile adapted for accessing the non-public network (NPN) to the user equipment (UE), and
- upon receiving the second profile at the user equipment (UE), the user equipment (UE) replaces the first profile on the universal subscriber identity module (USIM) with the second profile which causes the user equipment (UE) to switch to the non-public network (NPN).

7. The method of any one of the preceding claims, further comprising authorizing the user equipment (UE) access to the non-public network (NPN), and
send a steering of roaming (SoR) container to the user equipment (UE), the SoR includes at least the NPN identifier,
wherein upon receiving the SoR container, the PLMN identifier stored a universal subscriber identity module (USIM) on the memory of the user equipment (UE), is replaced by the non-public network (NPN) identifier.

8. The method of any one of the preceding claims, wherein after replacing the first profile on the universal subscriber identity module (USIM) with the second profile, a user input is requested for an explicit restart subscriber identity module (SIM) command.

9. The method according to claim 1, wherein the preferred public land mobile network (PLMN) is associated with a public land mobile network (PLMN) identifier, and the non-public network (NPN) is associated with a non-public network (NPN) identifier.

10. A wireless communication system comprising:
a user equipment (EU) comprising a wireless transmitter, a data memory and
a data processor,
a public mobile land network (PMI,N) coupled to a data memory and
a non-public network (NPN) coupled to a data memory,
wherein said user equipment running a computer program on said date processor and which:
transmits via a wireless transmitter to the non-public network (NPN) allowing detecting said user equipment (UE) comprising a first profile in a transmission range of the non-public network (NPN);
receives from said non-public network (NPN) a second profile adapted for accessing the non-public network (NPN), and
upon receiving the second profile at the user equipment (UE), replacing the first profile with the second profile which causes the user equipment UE to switch to the non-public network (NPN).

11. A wireless communication system comprising a user equipment (EU) comprising a data memory and a data processor, a public mobile land network (PMLN) and a non-public network (NPN) coupling to a data memory, wherein said non-public network (NPN) comprises a computer system running a non-public network computer program which:
allows detection of the non-public network (NPN) of said user equipment (UE) comprising a first profile in a transmission range of the non-public network (NPN);
verifying in a database in said non-public network data memory if the user equipment (UE) is allowed access to the non-public network (NPN);
if the user equipment (EU) is allowed access to the non-public network (NPN), sends a second profile adapted for accessing the non-public network (NPN) to the user equipment (UE), causing upon receiving the second profile at the user equipment (UE), the user equipment (UE) to replace the first profile with the second profile allowing the user equipment (UE) to switch to the non-public network (NPN).

12. A user equipment computer program which, when running on a data processor of said user equipment (EU) comprising a wireless transmitter and data memory, causes said user equipment to:
transmit via a wireless transmitter to the non-public network (NPN) allowing detecting said user equipment (UE) comprising a first profile in a transmission range of the non-public network (NPN);
receive from said non-public network (NPN) a second profile adapted for accessing the non-public network (NPN), and
upon receiving the second profile at the user equipment (UE), replace the first profile with the second profile which causes the user equipment UE to switch to the non-public network (NPN).

13. A non-public network (NPN) computer program which, when running on a data processor of said non-public network (NPN) comprising a series of wireless transmitters and data memory comprising a database, causes said non-public network (NPN) to:
allow detection of the non-public network (NPN) of said user equipment (UE) comprising a first profile in a transmission range of the non-public network (NPN);
verifying in a database in said non-public network data memory if the user equipment (UE) is allowed access to the non-public network (NPN);
if the user equipment (EU) is allowed access to the non-public network (NPN), sends a second profile adapted for accessing the non-public network (NPN) to the user equipment (UE), causing upon receiving the second profile at the user equipment (UE), the user equipment (UE) to replace the first profile with the second profile allowing the user equipment (UE) to switch to the non-public network (NPN).
